# EUROPEAN PATENT SPECIFICATION

(11) **EP 1 665 721 B1**
(45) Date of publication and mention of the grant of the patent: **21.11.2007**
(21) Application number: 04766730.8
(22) Date of filing: 07.09.2004
(51) Int. Cl.: H04L 29/06, H04Q 7/32

(54) **METHOD AND APPARATUS FOR DIRECTING NETWORK CONFIGURATION**
VERFAHREN UND VORRICHTUNG ZUR LENKUNG DER NETZWERKKONFIGURATION
PROCEDE ET APPAREIL DESTINES A DIRIGER UNE CONFIGURATION DE RESEAU

(30) Priority: 20.09.2003 GB 0322042
(43) Date of publication of application: 07.06.2006
(73) Proprietor: MOTOROLA, INC., Schaumburg, IL 60196 (US)
(72) Inventor: CONATY, Genevieve, Motorola Limited, Basingstoke, Hampshire RG22 4PD (GB); REID, Angus E., Motorola Limited, Basingstoke, Hampshire RG22 4PD (GB)
(74) Representative: McLeish, Nicholas Alistair Maxwell
(86) International application number: PCT/EP2004/052075
(87) International publication number: WO 2005/029808

(56) References cited:
- WO-A-01/90891
- J. HAMARD, G. CONATY, R. NAVARRO-PRIETO, J. CLOSE: "A User-Centric Approach for the Development of Usable Reconfigurable Terminals" SCOUT WORKSHOP, [Online] 16 September 2003 (2003-09-16), XP002313179 PARIS Retrieved from the Internet: URL:www.ist-scout.org> [retrieved on 2005-01-10] cited in the application
- MEHTA M ET AL: "Reconfigurable Terminals: An Overview of Architectural Solutions" August 2001 (2001-08), IEEE COMMUNICATIONS MAGAZINE, IEEE SERVICE CENTER, PISCATAWAY, US, PAGE(S) 82-89 , XP002223682 ISSN: 0163-6804 the whole document
- OLAZIREGI N ET AL: "Software Defined Radio Forum Contribution Architectures supporting SDR Terminals" 22 August 2001 (2001-08-22), , XP002223683 the whole document

## Description

### Technical Field

The invention relates to a method and apparatus for network configuration. In particular, it relates to a method and apparatus for directing software defined radio network configuration.

### Background

A software-defined radio (SDR) terminal can be configured to a particular network by updating the air interface software in the device. As a user of this terminal moves from place to place, there are many different available networks with many different characteristics to which the device is able to reconfigure.

The user is able to reconfigure these characteristics directly (for example, see WO 2001/90891, Roke Manor, or J. Hamard, G. Conaty, & R. Navarro-Prieto, 'A user-centric approach for the development of usable reconfigurable terminals', http://www.ist-scout.org SCOUT workshop, 16th September 2003). However, in order to select which network to reconfigure the terminal to, it would be best to know the user's preferences regarding factors such as quality of service, cost and so forth. However it is not practical to simply ask the user their preferences for certain network characteristics without mapping these characteristics onto decisions that are meaningful from the user's point of view.

For example, the user should not have to be asked to choose a preferred radio access technology such as universal mobile telecommunications service (UMTS), or global system for mobile communication (GSM), etc., because these terms are unlikely to be truly meaningful to the user in terms of their implications for quality of service and cost.

Whilst the user can set some preferences explicitly (for example, the user may specify a maximum price per minute for a particular service), it is preferable that the terminal, based on the user's behaviour or feedback, infers other preferences.

The need for user preference information in general is recognised in the EU projects 'TRUST' and 'SCOUT', which emphasise the necessity of having user preference information in order to make appropriate reconfiguration decisions for software-defined radio terminals.

For example, SCOUT D4.2.1 ("Analysis of Inter-System Handover Measurements and Criteria") discusses the need for "cost-related preferences," "reliability-related preferences," "provider-related preferences," and "radio access technology preferences (preferred modes and excluded modes)".

However, neither TRUST nor SCOUT describes the process or user interaction by which the user will specify such preferences, or how these preferences might be determined based on data provided by the system or the user.

Within the SCOUT project, the University of Portsmouth are investigating "adaptive user profiles" on the terminal and how such a profile might interact with the terminal's decision-making process in order to tailor the behaviour of the terminal to the user. The adaptive user profile will include the user's preferences regarding reconfiguration (in terms of cost and quality of service). However this work does not address the question of how to enable the user to specify these preferences in a way that will be meaningful to the user. See D.J. Allsopp and T. Kalus, "Smart 4G Mobiles: A User Centric Approach," AI 2003 (Annual International Conference of the British Computer Society's Specialist Group).

The use of a simple scale to capture a user's perceived quality of a multimedia sequence is an established aspect of subjective evaluation methodology (discussed in detail by A. Watson and A. Sasse, in "Measuring Perceived Quality of Speech and Video in Multimedia Conferencing Applications," ACM (Association for Computing Machinery) Multimedia 1998).

An existing patent publication US20030100308 (Intel) 'Device and method for intelligent wireless communication selection', describes the process by which a wireless device might select the wireless communication technology it is using (e.g. Bluetooth, 802.11B, CDMA, etc.), based in part on the user's preferences, including "the user's preferred communication carrier, quality preferences, power constraints, and privacy preferences." However, this document does not explain how the user specifies these preferences or how they might be inferred or calculated based on the user's behaviour or feedback.

US20030093784 (Koninklijke Philips Electronics) "Affective television monitoring and control" describes an example of a system that records the user's response to some content or quality of multimedia and uses this information to try to match future system performance to this user's preferences. In the specific case of '784, bio-sensors are worn by the user to determine the user's response to television content and this information is used to alter the content shown in order to match this user's apparent preferences.

Patents such as '784 address a similar problem of capturing and using user preference information, but the specific information captured and the purpose for which it is captured is significantly different.

Thus there still exists a need identified in TRUST and SCOUT to direct software defined radio (SDR) network configuration according to user experience.

The purpose of the present invention is to address the above problem.

### Summary of the Invention

The present invention provides a method of directing software defined radio network configuration.

In a first aspect, the present invention provides a method of directing software defined radio network configuration, as claimed in claim 1.

In a second aspect, the present invention provides apparatus operable to direct software defined radio (SDR) network configuration, as claimed in claim 15.

Further features of the present invention are as defined in the dependent claims.

Embodiments of the present invention will now be described by way of example with reference to the accompanying drawings, in which:

### Brief description of the drawings

FIG. 1 is a block diagram of a known radio network configuration process.
FIG. 2 illustrates a user interface layout in accordance with an embodiment of the present invention.
FIG. 3 illustrates a user interface layout in accordance with an embodiment of the present invention.
FIG. 4 is a block diagram of a radio network configuration process in accordance with an embodiment of the present invention.

### Detailed description

A method of directing software defined radio (SDR) network configuration is disclosed.

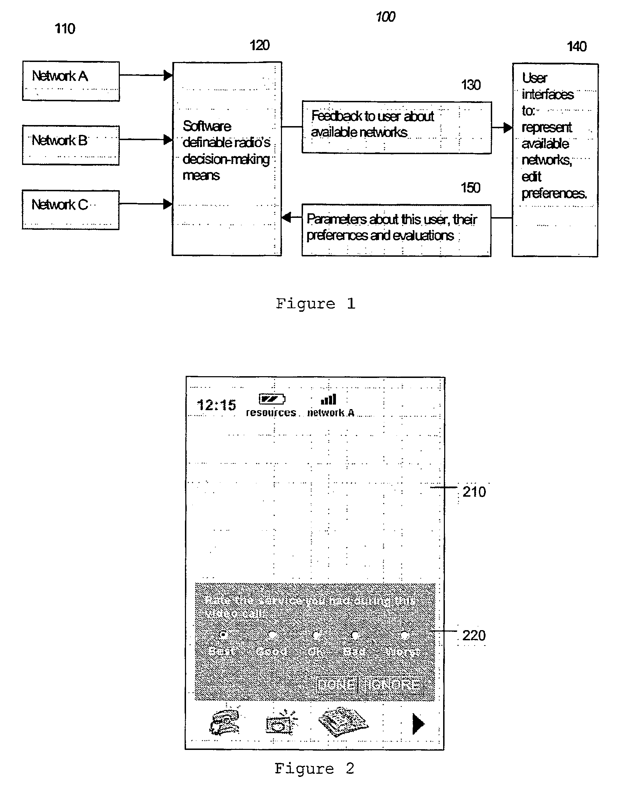

Referring to FIG. 1, in a typical scenario networks A, B, and C 110 make some information about themselves available to a terminal 100. A decision-making means 120 on the terminal 100 selects the best network (or a subset of networks from which the user may make the final choice, in a user-initiated reconfiguration) and passes this information 130 to the user interface 140 on the terminal 100.

In turn, the user interface 140 gathers some information about the user's preferences, and passes this information 150 to the decision-making means 120 on the terminal.

The present invention is concerned with how these user preference parameters are captured and used for the purpose of directing network configuration decisions.

Referring now to FIG. 2, in an embodiment of the present invention, the user interface 210 may provide a means 220 for the user to rate a criterion of a service immediately upon cessation of a service or shortly thereafter.

The occurrence of this provision may be made further dependent upon factors such as the number of previous user ratings obtained, prior variability in the user ratings, and/or the likelihood that a service was in a marginal or poor category for the given criterion.

In an embodiment of the present invention, the proffered user evaluation comprises a scalar rating of at least a first criterion for a used service via an SDR user interface.

Criteria are intended to be meaningful to the user's experience of a service and belong to the following set;
i. Quality; and
ii. Value for money

The rating means 220 may include an option to ignore the rating process.

Rating means 220 is appropriate for services in which only one network has been used. However if there has been a handover between different networks or network technologies during the call, this rating means may be difficult to analyse. In such circumstance it would be preferable to ascertain whether the user would have a preferred better quality of service by detecting whether the user manually opted for better service during the call (thereby initiating the reconfiguration process / handover).

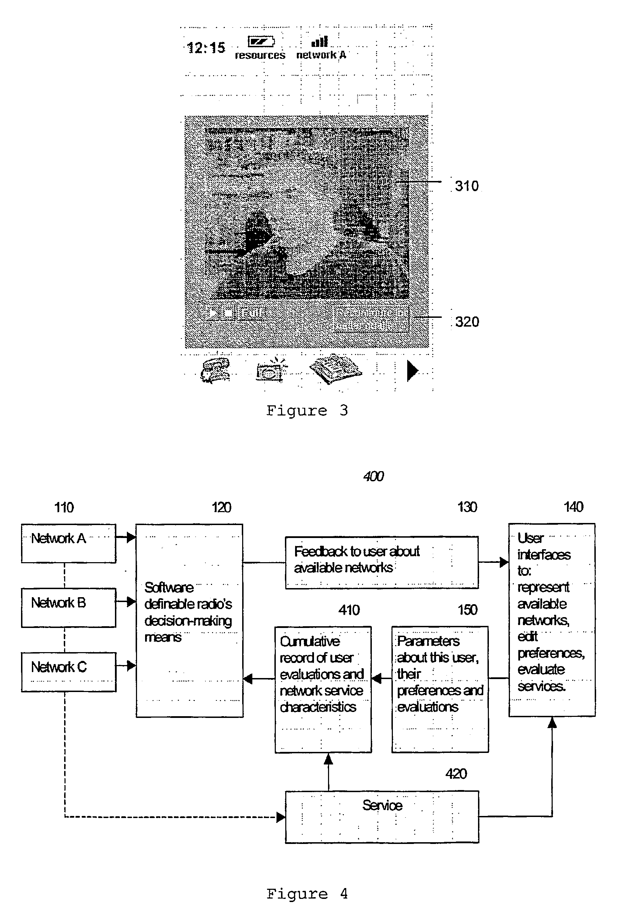

Thus in an embodiment of the present invention, an interface such as that in FIG. 3 is proposed for such circumstances. Here the user is given an option 320 to reconfigure to obtain higher quality while watching a streaming video 310 (a binary choice rather than a scalar rating). If the user opts to reconfigure, this may be interpreted as a poor rating of the current service. If they do not, then it may be inferred as a good rating.

In an alternative embodiment of the present invention, a binary choice option is also employed to solicit the user's ex post facto feedback about the quality of service. The user is asked whether they would have preferred a better service (a binary choice rather than a scalar rating) or equivalently whether the service was acceptable. The same subsequent analysis of the user response as that performed for a scalar rating can still be used by interpreting the binary response as a poor rating if they would have preferred a better service, and a good rating if not.

Upon receiving or inferring a user evaluation as per any of the embodiments above, the SDR selects any or all of the following network service characteristics for input into a cumulative (ongoing) record;
i. The service used (e.g. video call, voice call, multimedia message, streaming video and/or audio etc.);
ii. The network provider of the service;
iii. The network load rating (NLR) of the service network;
iv. The quality of service rating (QoSR) of the service network; and
v. The radio access technology of the service network.

These characteristics are all available under the current TRUST and SCOUT frameworks.

In addition the user's evaluation of the service is also selected, as is optionally also the user's subprofile (e.g. SDR is in 'at work' mode or 'at home' mode, etc).

Referring now to the software definable radio 400 of FIG. 4, in an embodiment of the present invention, selected network service characteristics, the user evaluation and optionally the user's sub-profile are used as input to at least a first cumulative record 410.

Structurally, the cumulative record 410 may either be a single complex record with sub-records for different services and/or user sub-profiles, or may be one of a plurality of simpler records selected by the type of service and/or user sub-profile as appropriate. The cumulative record is preferably stored by storage means of the SDR, but alternatively may stored remotely.

Typically a simple cumulative record or a cumulative sub-record (for simplicity, both hereinafter referred to as a 'cumulative record') exists for each type of service, and optionally for each combination of type of service and user sub-profile.

A cumulative record 410 comprises any or all of the following elements;
i. a range for an acceptable network load rating (NLR);
ii. a threshold value for an unacceptable NLR;
iii. a range for an acceptable quality of service rating (QoSR);
iv. a threshold value for an unacceptable QoSR;
v. a list of network service providers in order of preference;
vi. a list of radio access technologies in order of preference.

Acceptable ranges for NLR may be defined as lying between 3 standard deviations below the mean value NLR associated with a user evaluation for a given service 420 equivalent to '4/5' or 'good', and 3 standard deviations above the mean value NLR associated with a user evaluation for a given service 420 equivalent to '5/5' or 'best' on a scale such as '1 2 3 4 5', or 'worst / poor / okay / good / best'. A similar calculation may be applied to acceptable QoSR ranges.

Calculating an upper bound on acceptable ranges recognises that some users may not perceive differences between high quality services and so not require the theoretically best possible service, which may carry an additional cost premium.

A threshold value for unacceptable NLR may be defined as 3 standard deviations above the mean value NLR associated with a user evaluation equivalent to '2/5' or 'poor' as on the scales described above. A similar calculation may be applied to an unacceptable QoSR threshold.

Preference lists can be constructed according to the average or weighted average of user evaluations for each service associated with each network or access technology.

It will be clear to a person skilled in the art that these calculations may be modified according to manufacturer preferences or changes in network provision characteristi cs, etc.

Statistics for each cumulative record 410 may be incrementally calculated using current values and the latest user evaluation, or calculated from a stored set of historic user evaluations that includes the latest.

It will also be clear to a person skilled in the art that the statistical processes applied to the cumulative records 410 may be altered, primarily to increase or decrease the impact of recent individual user evaluations on the records.

In an embodiment of the present invention, cumulative records 410 are initialised with predefined values.

In a further embodiment of the present invention, said predefined values are selected according to user profile data entered during a registration process.

Such predefined values may be derived from laboratory-based subjective evaluations of video quality to define some statistics for "acceptable" and "unacceptable" quality of service.

In a still further embodiment of the present invention, the predefined values are used by the SDR until the user has amassed enough personal ratings data in the cumulative record for sufficiently reliable network configuration decisions to be made.

In an embodiment of the present invention, when an SDR must make a decision whether to reconfigure to a network in order to use a service, any or all of the information in the relevant cumulative record 410 is passed to the configuration decision means 120.

Typically the candidate networks 110 provide their current or predicted network load and quality of service ratings. If these are all in acceptable ranges, then order of preference is used. If a network rating is below the unacceptable threshold, that network will not be considered unless no other option exists.

Thus as shown in FIG. 4, a previous service 420 from one of the candidate network providers 110 has been evaluated by the user, and associated with a selection of network service characteristics in a cumulative record 410. This cumulative record now acts as input into a network service configuration decision for the next (equivalent) service, being conducted by the decision means 120.

In an embodiment of the present invention, once a user has provided sufficient ratings data to sufficiently characterise a service, the user is then only asked to rate the service in cases where the network performance is marginal (i.e. falls between the categories of "acceptable" and "unacceptable" already defined by this user for this service).

In a further embodiment of the present invention, once a user has provided sufficient ratings data to well characterise a service, the user is no longer asked to rate that service.

In an alternative embodiment of the present invention, selected network service characteristics and the user evaluation and optionally the user's sub-profile are used as input into at least a first cumulative record that is integral to an adaptive decision network (not shown), the adaptive decision network operable to provide a network configuration decision for a given service.

Typically the adaptive decision network will be an artificial neural network (ANN), operable to associate network service characteristics with user evaluations and optionally the user's sub-profile.

The ANN may be structured so as to accept candidate network information as a stimulus and provide a likely user evaluation as a response, so ranking the overall preferability of the network for that service.

In an embodiment of the present invention, the ANN is pre-trained on typical data, and then continues to train with subsequent user evaluations and the associated network service characteristics.

## Claims

1. A method of directing software defined radio SDR (100) network configuration, comprising the steps of;
i. Obtaining (140) a user's evaluation of a service (420) the user has recently used; and
ii. Inputting (150) the user's evaluation of said service (420) and at least a first network service characteristic pertaining to the service into at least a first cumulative record (410) relating network service characteristics to user evaluations.

2. A method according to claim 1, wherein at least a first cumulative record is maintained for each type of service used.

3. A method according to any one of claims 1 and 2, wherein a cumulative record is maintained for each combination of type of service and user sub-profile used.

4. A method according to any one of the preceding claims, wherein cumulative records are stored by the SDR.

5. A method according to any one of the preceding claims, wherein the user's evaluation comprises a scalar rating of at least a first criterion for a received service via an SDR user interface.

6. A method according to claim 5, wherein the first criterion is any one of the following set;
i. quality; and
ii. value for money.

7. A method according to any one of claims 1 to 4, wherein the user's evaluation comprises a binary decision that the service is / is not acceptable, or that a better service is not / is desired.

8. A method according to any one of claims 5 to 7 wherein an SDR user interface provides a means for the user to input an evaluation of a service immediately upon cessation of that service.

9. A method according to claim 7 wherein the SDR user interface provides a means for the user to input an evaluation of a service during that service.

10. A method according to any one of the preceding claims, wherein the network service characteristics selected for input to a cumulative record may be any or all of the following set;
i. the service used;
ii. the network provider of the service;
iii. the network load rating NLR of the service network;
iv. the quality of service rating QoSR of the service network; and
v. the radio access technology of the service network.

11. A method according to any one of the preceding claims, wherein a cumulative record comprises any or all of the following elements;
i. a range for an acceptable network load rating;
ii. a threshold value for an unacceptable network load rating;
iii. a range for an acceptable quality of service rating;
iv. a threshold value for an unacceptable quality of service rating;
v. a list of network service providers in order of preference;
vi. a list of radio access technologies in order of preference;

12. A method according to claim 11 wherein any or all of the elements of at least a first cumulative record (410) are passed to a network reconfiguration decision means (120).

13. A method according to claim 12 wherein the network configuration decision means (120) uses elements of at least a first cumulative record (410) to select one of a plurality of available networks (110) for a given service (420) that provides the most suitable criteria based on the user's cumulative feedback.

14. A method according to any one claims 1 to 10, wherein a cumulative record is integral to an adaptive decision network, the adaptive decision network operable to provide a network reconfiguration decision.

15. Apparatus operable to direct software defined radio SDR network configuration, comprising;
i. Input means (140) operable to obtain a user's evaluation of a service (420) the user has recently used; and
ii. A memory means operable to store at least a first cumulative record (410) relating network service characteristics to user evaluations.

16. Apparatus according to claim 15, wherein the memory means is operable to store a cumulative record (410) comprising any or all of the following elements;
i. a range for an acceptable network load rating;
ii. a threshold value for an unacceptable network load rating;
iii. a range for an acceptable quality of service rating;
iv. a threshold value for an unacceptable quality of service rating;
v. a list of network service providers in order of preference;
vi. a list of radio access technologies in order of preference;

17. Apparatus according to claim 16 further comprising means to pass any or all of the elements of at least a first cumulative record (410) to a network reconfiguration decision means (120).

18. Apparatus according to claim 17 wherein the network reconfiguration decision means (120) further comprises selection means operable to use elements of at least a first cumulative record (410) to select one of a plurality of available networks (110) for a given service that provides the most suitable criteria based on the user's cumulative feedback.

19. Apparatus according to any one of claims 15 to 18, wherein a software definable radio (400) comprises said apparatus.

## Patentansprüche

1. Verfahren zur Steuern einer software defined radio-bzw.-SDR-(100)-Netzwerkkonfiguration , welches die folgenden Schritte umfasst:
i. Erlangen (140) einer Benutzereinschätzung eines Dienstes (420), den der Benützer kürzlich verwendet hat; und
ii. Eingabe (150) der Benutzereinschätzung des Dienstes (420) und von mindestens einem den Dienst betreffenden ersten Netzwerkdienstmerkmal in mindestens eine erste kumulative Aufzeichnung (410), die die Netzwerkdienstmerkmale mit Benutzereinschätzungen verknüpft.

2. Verfahren nach Anspruch 1, **dadurch gekennzeichnet, dass** mindestens eine erste kumulative Aufzeichnung für jede Art von verwendetem Dienst verwaltet wird.

3. Verfahren nach einem der Ansprüche 1 oder 2, **dadurch gekennzeichnet, dass** eine kumulative Aufzeichnung für jede Kombination der Art von verwendetem Dienst und des verwendeten Benutzerunterprofils verwaltet wird.

4. Verfahren nach einem der vorhergehenden Ansprüche, **dadurch gekennzeichnet, dass** kumulative Aufzeichnungen von dem SDR gespeichert werden.

5. Verfahren nach einem der vorhergehenden Ansprüche, **dadurch gekennzeichnet, dass** die Benutzereinschätzung eine skalare Bewertung von mindestens einem ersten Kriterium für einen empfangenen Dienst über eine SDR-Benutzerschnittstelle aufweist.

6. Verfahren nach Anspruch 5, **dadurch gekennzeichnet, dass** das erste Kriterium eines aus der folgenden Reihe ist:
i. Qualität; und
ii. Preis-Leistungs-Verhältnis.

7. Verfahren nach einem der Ansprüche 1 bis 4, **dadurch gekennzeichnet, dass** die Benutzereinschätzung eine binäre Entscheidung darüber aufweist, dass der Dienst akzeptabel / nicht akzeptabel ist oder dass ein besserer Dienst nicht gewünscht / gewünscht ist.

8. Verfahren nach einem der Ansprüche 5 bis 7, **dadurch gekennzeichnet, dass** eine SDR-Benutzerschnittstelle ein Mittel für den Benutzer bereitstellt, um eine Einschätzung eines Dienstes unmittelbar bei Beendigung dieses Dienstes eingeben zu können.

9. Verfahren nach Anspruch 7, **dadurch gekennzeichnet, dass** die SDR-Benutzerschnittstelle ein Mittel für den Benutzer bereitstellt, um eine Einschätzung eines Dienstes während dieses Dienstes eingeben zu können.

10. Verfahren nach einem der vorhergehenden Ansprüche, **dadurch gekennzeichnet, dass** die zur Eingabe in eine kumulative Aufzeichnung ausgewählten Netzwerkdienstmerkmale jedes beliebige oder alle der folgenden Reihe sein können:
i. der verwendete Dienst;
ii. der Netzwerklastanbieter des Dienstes;
iii. die Netzwerklastbewertung bzw. NLR des Dienstnetzwerkes;
iv. die Dienstqualitätsbewertung bzw. QoSR des Dienstnetzwerkes; und
v. die Funkzugriffstechnologie des Dienstnetzwerkes.

11. Verfahren nach einem der vorhergehenden Ansprüche, **dadurch gekennzeichnet, dass** eine kumulative Aufzeichnung jedes beliebige oder alle der folgenden Elemente aufweist:
i. einen Bereich für eine akzeptable Netzwerklastbewertung;
ii. einen Schwellenwert für eine nicht akzeptable Netzwerklastbewertung;
iii. einen Bereich für eine akzeptable Dienstqualitätsbewertung;
iv. einen Schwellenwert für eine nicht akzeptable Dienstqualitätsbewertung;
v. eine Liste der Netzwerkdienstanbieter in Reihenfolge der Präferenz;
vi. eine Liste der Funkzugriffstechnologien in Reihenfolge der Präferenz.

12. Verfahren nach Anspruch 11, **dadurch gekennzeichnet, dass** jedes beliebige oder alle Elemente von mindestens einer ersten kumulativen Aufzeichnung (410) an eine Netzwerk-Neukonfigurationsentscheidungsvorrichtung (120) geleitet werden.

13. Verfahren nach Anspruch 12, **dadurch gekennzeichnet, dass** die Netzwerk-Neukonfigurationsentscheidungsvorrichtung (120) Elemente von mindestens einer ersten kumulativen Aufzeichnung (410) verwendet, um eines aus einer Vielzahl von verfügbaren Netzwerken (110) für einen gegebenen Dienst (420) auszuwählen, welches basierend auf der kumulativen Rückmeldung des Benutzers die geeignetesten Kriterien bietet.

14. Verfahren nach einem der Ansprüche 1 bis 10, **dadurch gekennzeichnet, dass** eine kumulative Aufzeichnung integriert in einem adaptiven Entscheidungsnetzwerk ist, wobei das adaptive Entscheidungsnetzwerk zur Bereitstellung einer Netzwerk-Neukonfigurationsentscheidung betriebsbereit ist.

15. Vorrichtung, die zum Steuern einer SDR-Netzwerkkonfiguration betriebsbereit ist, welche Folgendes umfasst:
i. Eingabevorrichtung (140), die zum Erlangen einer Benutzereinschätzung eines Dienstes (420), den der Benutzer kürzlich verwendet hat, betriebsbereit ist; und
ii. eine Speichervorrichtung, die zum Speichern von mindestens einer kumulativen Aufzeichnung (410), die Netzwerkdienstmerkmale mit Benutzereinschätzungen verknüpft, betriebsbereit ist.

16. Vorrichtung nach Anspruch 15, **dadurch gekennzeichnet, dass** die Speichervorrichtung zum Speichern einer kumulativen Aufzeichnung (410) betriebsbereit ist, die jedes beliebige oder alle der folgenden Elemente aufweist:
i. einen Bereich für eine akzeptable Netzwerklastbewertung;
ii. einen Schwellenwert für eine nicht akzeptable Netzwerklastbewertung;
iii. einen Bereich für eine akzeptable Dienstqualitätsbewertung;
iv. einen Schwellenwertbereich für eine nicht akzeptable Dienstqualitätsbewertung;
v. eine Liste von Netzwerkdienstanbietern in Reihenfolge der Präferenz;
vi. eine Liste der Funkzugriffstechnologien in Reihenfolge der Präferenz.

17. Vorrichtung nach Anspruch 16, welche des Weiteren Mittel aufweist, um jedes beliebige oder alle Elemente von mindestens einer kumulativen Aufzeichnung (410) an eine Netzwerk-Neukonfigurationsentscheidungsvorrichtung (120) zu leiten.

18. Vorrichtung nach Anspruch 17, **dadurch gekennzeichnet, dass** die Netzwerk-Neukonfigurationsentscheidungsvorrichtung (120) des Weiteren Auswahlmittel aufweist, die zur Verwendung von Elementen von mindestens einer ersten kumulativen Aufzeichnung (410) betriebsbereit sind, um eines aus einer Vielzahl von verfügbaren Netzwerken (110) für einen gegebenen Dienst auszuwählen, welches basierend auf der kumulativen Rückmeldung des Benutzers die geeignetestes Kriterien bietet.

19. Vorrichtung nach einem der Ansprüche 15 bis 18, **dadurch gekennzeichnet, dass** ein SDR (400) diese Vorrichtung aufweist.

## Revendications

1. Procédé pour diriger une configuration de réseau radio définie par logiciel SDR (100), comprenant les étapes consistant à :
i. obtenir (140) une évaluation d'un utilisateur d'un service (420) que l'utilisateur a utilisé récemment ; et
ii. entrer (150) l'évaluation de l'utilisateur dudit service (420) et au moins une première caractéristique de service de réseau se rapportant au service dans au moins un premier enregistrement cumulatif (410) reliant des caractéristiques de service de réseau à des évaluations d'utilisateur.

2. Procédé selon la revendication 1, dans lequel au moins un premier enregistrement cumulatif est maintenu pour chaque type de service utilisé.

3. Procédé selon l'une quelconque des revendications 1 et 2, dans lequel un enregistrement cumulatif est maintenu pour chaque combinaison de type de service et de sous-profil d'utilisateur utilisée.

4. Procédé selon l'une quelconque des revendications précédentes, dans lequel des enregistrements cumulatifs sont mémorisés par la SDR.

5. Procédé selon l'une quelconque des revendications précédentes, dans lequel l'évaluation de l'utilisateur comprend une évaluation scalaire d'au moins un premier critère pour un service reçu via une interface utilisateur SDR.

6. Procédé selon la revendication 5, dans lequel le premier critère est l'un quelconque des éléments suivants :
i. une qualité ; et
ii. une valeur en argent.

7. Procédé selon l'une quelconque des revendications 1 à 4, dans lequel l'évaluation de l'utilisateur comprend une décision binaire quant au fait que le service est/n'est pas acceptable, ou qu'un meilleur service n'est pas/est souhaité.

8. Procédé selon l'une quelconque des revendications 5 à 7, dans lequel une interface utilisateur SDR fournit des moyens pour que l'utilisateur entre une évaluation d'un service immédiatement lors de la cessation de ce service.

9. Procédé selon la revendication 7, dans lequel l'interface utilisateur SDR fournit des moyens pour que l'utilisateur entre une évaluation d'un service pendant ce service.

10. Procédé selon l'une quelconque des revendications précédentes, dans lequel les caractéristiques de service de réseau sélectionnées pour être entrées dans un enregistrement cumulatif peuvent être l'un quelconque ou l'ensemble des éléments suivants :
i. le service utilisé ;
ii. le fournisseur de réseau du service ;
iii. l'évaluation de charge du réseau NLR du réseau de service ;
iv. l'évaluation de la qualité de service QoSR du réseau de service ; et
v. la technologie d'accès radio du réseau de service.

11. Procédé selon l'une quelconque des revendications précédentes, dans lequel un enregistrement cumulatif comprend l'un quelconque ou l'ensemble des éléments suivantes :
i. une plage pour une évaluation de charge de réseau acceptable ;
ii. une valeur de seuil pour une évaluation de charge de réseau inacceptable ;
iii. une plage pour une évaluation de qualité de service acceptable ;
iv. une valeur de seuil pour une évaluation de qualité de service inacceptable ;
v. une liste de fournisseurs de service de réseau dans l'ordre des préférences ;
vi. une liste de technologies d'accès radio dans l'ordre des préférences.

12. Procédé selon la revendication 11, dans lequel l'un quelconque ou l'ensemble des éléments d'au moins un premier enregistrement cumulatif (410) sont transmis à des moyens de décision de reconfiguration de réseau (120).

13. Procédé selon la revendication 12, dans lequel les moyens de décision de reconfiguration de réseau (120) utilisent des éléments d'au moins un premier enregistrement cumulatif (410) pour sélectionner l'un d'une pluralité de réseaux (110) disponibles pour un service (420) donné qui fournit les critères les plus adaptés sur la base du retour cumulatif de l'utilisateur.

14. Procédé selon l'une quelconque des revendications 1 à 10, dans lequel un enregistrement cumulatif fait partie d'un réseau à décision adaptative, le réseau à décision adaptative pouvant être mis en oeuvre pour fournir une décision de reconfiguration de réseau.

15. Dispositif pouvant être mis en oeuvre pour diriger une configuration de réseau radio définie par logiciel SDR, comprenant :
i. des moyens d'entrée (140) pouvant être mis en oeuvre pour obtenir une évaluation d'un utilisateur d'un service (420) que l'utilisateur a utilisé récemment ; et
ii. des moyens de mémorisation pouvant être mis en oeuvre pour mémoriser au moins un premier enregistrement cumulatif (410) reliant des caractéristiques de service de réseau à des évaluations d'utilisateur.

16. Dispositif selon la revendication 15, dans lequel les moyens de mémorisation peuvent être mis en oeuvre pour mémoriser un enregistrement cumulatif (410) comprenant l'un quelconque ou l'ensemble des éléments suivantes :
i. une plage pour une évaluation de charge de réseau acceptable ;
ii. une valeur de seuil pour une évaluation de charge de réseau inacceptable ;
iii. une plage pour une évaluation de qualité de service acceptable ;
iv. une valeur de seuil pour une évaluation de qualité de service inacceptable ;
v. une liste de fournisseurs de service de réseau dans l'ordre des préférences ;
vi. une liste de technologies d'accès radio dans l'ordre des préférences.

17. Dispositif selon la revendication 16 comprenant en outre des moyens pour transférer l'un quelconque ou l'ensemble des éléments d'au moins un premier enregistrement cumulatif (410) à des moyens de décision de reconfiguration de réseau (120).

18. Dispositif selon la revendication 17, dans lequel les moyens de décision de reconfiguration de réseau (120) comprennent en outre des moyens de sélection pouvant être mis en oeuvre pour utiliser des éléments d'au moins un premier enregistrement cumulatif (410) pour sélectionner l'un d'une pluralité de réseaux (110) disponibles pour un service donné qui fournit les critères les plus adaptés sur la base du retour cumulatif de l'utilisateur.

19. Dispositif selon l'une quelconque des revendications 15 à 18, dans lequel une configuration radio pouvant être définie par logiciel (400) comprend ledit dispositif.
